# EUROPEAN PATENT SPECIFICATION

(11) **EP 3 307 434 B1**
(45) Date of publication and mention of the grant of the patent: **09.06.2021**
(21) Application number: 15719054.7
(22) Date of filing: 09.04.2015
(51) Int. Cl.: B01J 29/76, B01D 53/94, C01B 39/02

(54) **STABILIZED MICROPOROUS CRYSTALLINE MATERIAL, THE METHOD OF MAKING THE SAME, AND THE USE FOR SELECTIVE CATALYTIC REDUCTION OF NOX**
STABILISIERTES MIKROPORÖSES KRISTALLINES MATERIAL, VERFAHREN ZU SEINER HERSTELLUNG UND VERWENDUNG ZUR SELEKTIVEN KATALYTISCHEN NOX-REDUKTION
MATÉRIAU CRISTALLIN MICROPOREUX STABILISÉ, PROCÉDÉ DE FABRICATION DE CELUI-CI ET UTILISATION POUR LA RÉDUCTION CATALYTIQUE SÉLECTIVE DE NOX

(43) Date of publication of application: 18.04.2018
(73) Proprietor: PQ Corporation, Valley Forge, PA 19482-0840 (US)
(72) Inventor: Li, Hong-Xin, Lansdale, PA 19446 (US); MODEN, Bjorn, Glen Mills, PA 19432 (US); COOPER, David, Morrrisville,PA 19067 (US); CORMIER, William,E., Harleysville , PA 19348 (US)
(74) Representative: Finnegan Europe LLP
(86) International application number: PCT/US2015/025129
(87) International publication number: WO 2016/164027

(56) References cited:
- WO-A1-2013/082550
- WO-A1-2013/082560
- WO-A2-2010/054034
- US-A1- 2014 154 175

## Description

The present disclosure generally relates to a microporous crystalline material having building units of double-6-rings *(d6r)* and pore opening of 8-rings. The present disclosure more particularly relates microporous crystalline material comprising a first metal chosen from alkali-earth group, rare-earth group, alkali group, or mixtures thereof, a second metal chosen from iron and/or copper, and having molar silica to alumina ratio (SAR) from 3 to 12. The present disclosure also relates to methods of making such a material, that may include steaming to enhance its stability, and using such stabilized microporous crystalline material, including for selective catalytic reduction (SCR) of nitrogen oxides (NOₓ) in exhaust gases.

Nitric oxides (NOₓ) have been known to be polluting gases, principally by reason of their corrosive action. In fact, they are the primary reason for the cause of acid rain. A major contributor of pollution by NOₓ is their emission in the exhaust gases of diesel automobiles and stationary sources such as coal-fired power plants and turbines. To avoid these harmful emissions, SCR is employed and involves the use of zeolitic catalysts in converting NOₓ to nitrogen and water.

Thus, there is a continuing need for improved microporous crystalline material that has enhanced performance and hydrothermal stability properties to allow for the selective catalytic reduction of NOₓ in exhaust gases, even under extreme temperature and humidity conditions. US 2014/154175, WO 2013/082550 and WO 2013/082560 disclose microporous crystalline materials that are used for selective catalytic reduction of NOₓ.

### SUMMARY

In part to address this need, the present disclosure is directed to a material for the selective catalytic reduction of NOₓ in exhaust gases that has enhanced performance and hydrothermal stability properties under extreme temperature and humidity conditions.

There is disclosed a microporous crystalline material having building units of double-6-rings (d6r) and pore opening of 8-rings, comprising a first metal chosen from alkali-earth group, rare-earth group, alkali group, or mixtures thereof, a second metal chosen from iron and/or copper. The microporous crystalline material has a molar silica to alumina ratio (SAR) from 3 to 12, and exhibits an NH₃ adsorption capacity expressed as the molar NH₃/Al ratio of 0.7 to 0.9.

There is also disclosed a method of selective catalytic reduction (SCR) of nitrogen oxides in exhaust gas, comprising at least partially contacting said exhaust gases with an article comprising a microporous crystalline material having building units of double-6-rings *(d6r)* and pore opening of 8-rings, wherein the material comprises a first metal chosen from alkali-earth group, rare-earth group, alkali group or mixtures thereof, and a second metal chosen from copper, iron or mixtures thereof. The material used in this method of SCR has a molar silica to alumina ratio (SAR) from 3 to 12; and exhibits an NH₃ adsorption capacity expressed as the molar NH₃/Al ratio of 0.7 to 0.9.

There is also disclosed a method of making a microporous crystalline material described herein. The method of making comprises synthesizing a material having building units of double-6-rings *(d6r)* and pore opening of 8-rings, where the material has molar silica to alumina ratio (SAR) from 3 to 12, and exhibits an NH₃ adsorption capacity expressed as the molar NH₃/Al ratio of 0.7 to 0.9. The method comprises mixing sources of sodium, potassium, alumina, silica, water and optionally an organic template to form a gel; heating the gel in a vessel at a temperature ranging from 80 to 200 °C to form a crystalline material; ammonium-exchanging the material; introducing a first metal chosen from alkali-earth group, rare-earth group, alkali group or mixtures thereof, and a second metal chosen from copper, iron or mixtures thereof, into said crystalline material by liquid- phase or solid ion-exchange, impregnation; and steaming said material at 400 to 600 °C in 1 to 100% steam for at least 0.1 hour.

Aside from the subject matter discussed above, the present disclosure includes a number of other features such as those explained hereinafter.

### BRIEF DESCRIPTION OF THE DRAWINGS

The accompanying figures are incorporated in, and constitute a part of this specification.
**Figure 1** is a graph comparing NO conversion as a function of temperature for samples after water immersion (Example 10) and Comparable Example 11. All NH₃-SCR data were collected under the following conditions: 500 ppm NO; NH₃/N₀=1.0; 5 vol% O₂; balance N₂; space velocity=50,000 h⁻¹.
**Figure 2** is a graph comparing NO conversion as a function of temperature for samples after water immersion (Example 12) and Comparable Example 13. All NH₃-SCR data were collected under the following conditions: 500 ppm NO; NH₃/NO=1.0; 5 vol% O₂; balance N₂; space velocity=50,000 h-1.

### DETAILED DESCRIPTION

As used in the present disclosure, "hydrothermally stable" means that the crystalline material has the ability to retain a certain percentage of initial surface area and/or microporous volume after exposure to elevated temperature and/or humidity conditions (compared to room temperature) for a certain period of time.

Surface area was determined in accordance with the well-known BET (Brunauer-Emmett-Teller) nitrogen adsorption technique, also referred to as the "BET method." Herein the general procedure and guidance of ASTM D4365-95 is followed in the application of the BET method to the materials according to the present disclosure. To ensure a consistent state of the sample to be measured, all samples are pretreated. Suitably pretreatment involves heating the sample, for example to a temperature of 400 to 500 °C, for a time sufficient to eliminate free water, such as 3 to 5 hours. In one embodiment, the pretreatment consists in heating each sample to 500 °C for 4 hours.

"Initial Surface Area" refers to the surface area of the freshly made crystalline material before exposing it to any aging conditions.

"Micropore volume" refers to indicate the total volume of pores having a diameter of less than 20 angstroms. "Initial Micropore Volume" means the micropore volume of the freshly made crystalline material, i.e., before exposing it to any aging conditions. The assessment of micropore volume is particularly derived from the BET measurement techniques by an evaluation method called the t-plot method (or sometimes just termed the t-method) as described in the literature (Journal of Catalysis 3, 32 (1964)).

"Mesopore volume" refers to the volume of pores having a diameter of greater than 20 angstroms up to the limit of 600 angstroms.

Similarly, "micropore area" refers to the surface area in pores less 20 angstroms, and "mesopore area" refers to the surface area in pores between 20 angstroms and 600 angstroms.

"NH₃ adsorption capacity" refers to the amount of NH₃ adsorbed, as measured using the following NH₃ temperature programmed desorption (NH₃-TPD) technique. Prior to NH₃-TPD, materials were heated *in situ* in argon at 10 °C/min to 520 °C and kept at this temperature for 1 hour. The furnace was then cooled to 100 °C. NH₃ was adsorbed onto the zeolite at 100 °C for 1 hour using 2000 ppm NH₃/N₂, followed by flowing argon for 1 hour to remove physisorbed NH₃. During the NH₃-TPD, a ramping rate of 10 °C/min from 100 to 650 °C was used while flowing argon and monitoring the thermal conductivity of the outlet gas. The thermal conductivity signal was integrated between 100 and 650 °C, and was converted to mmol NH₃/g by comparing the integrated area to that of a material with known NH₃ adsorption capacity.

The NH₃ adsorption capacity can also be expressed as the "molar NH₃/Al ratio". The molar NH₃/Al ratio is the ratio of the mmol NH₃/g measured by NH₃-TPD and the mmol Al/g measured by X-ray Fluorescence (XRF).

"Direct synthesis" (or any version thereof) refers to a method of introducing cationic metals or metal clusters during zeolite synthesis. A direct synthesis method is in contrast to a method of introducing cationic metals or metal clusters that requires a post-synthetic process, such as by cationic exchange, impregnation, or chemical vapor deposition of metal precursors after zeolite crystallization. Direct synthesis does not suffer from the drawbacks associated with post-synthetic procedures, such as the need of several steps to achieve the required metal-containing zeolite, the lack of uniformity in the distribution of the metal within the channels and cavities, and the limitation for efficient diffusion of the metal in small pore zeolites depending on its ionic radius.

"Defined by the Structure Commission of the International Zeolite Association," is intended to mean those structures included but not limited to, the structures described in "Atlas of Zeolite Framework Types," Baerlocher et al. Sixth Revised Edition (Elsevier 2007). For example, this reference shows the "Double-6-rings (d6r)" described and claimed herein, is a structural building unit.

"Selective Catalytic Reduction" or "SCR" refers to the reduction of NOₓ (typically with ammonia) in the presence of oxygen to form nitrogen and H₂O.

"Exhaust gas" refers to any waste gas formed in an industrial process or operation and by internal combustion engines, such as from any form of motor vehicle.

The phrases *"chosen from"* or *"selected from"* as used herein refers to selection of individual components or the combination of two (or more) components. For example, the metal portion of the large crystal, organic-free chabazite described herein may be chosen from copper and iron, which means the metal may comprise copper, or iron, or a combination of copper and iron.

The present application discloses crystalline materials, such as microporous aluminosilicate zeolite, including an aluminosilicate chabazite, methods of making them, and methods of using them for the selective catalytic reduction of nitric oxides. In one aspect, the microporous crystalline material has building units of double-6-rings *(d6r)* and pore opening of 8-rings. The disclosed crystalline material falls within the structural codes for the materials described herein include CHA, LEV, AEI, AFT, AFX, EAB, ERI, KFI, SAT, TSC, and SAV, with the crystal structure CHA being particularly noted.

The foregoing CHA crystal structure generally has a unit cell angle below 94.55 degrees, such as a unit cell angle ranging from 94.30-94.50 degrees. The unit cell may also have a [3 2 0] peak below 36.05 degrees 2-theta.

The material has molar silica to alumina ratio (SAR) from 3 to 12, such as from 5 to 10, and exhibits an NH₃ adsorption capacity expressed as the molar NH₃/Al ratio of 0.7 to 0.9. The material, which may have pore opening ranging from 3 to 5 Angstroms, further includes a first metal chosen from alkali-earth group, rare-earth group, alkali group or mixtures thereof, and a second metal chosen from copper, iron or mixtures thereof.

The first metal may comprise Alkali-earth metals, which are the 6 elements that are located in Group 2 elements of the Periodic Table. Non-limiting examples of the alkali-earth metal that can comprise the first metal used herein include magnesium, calcium, strontium, or barium, or mixtures thereof. Alkali metals are the 6 elements that are located in Group 1 elements of the Periodic Table, excluding hydrogen. Non-limiting examples of the alkali metal that can comprise the first metal used herein include potassium, rubidium, cesium, or mixtures thereof.

In one embodiment, the first metal comprises magnesium, calcium, strontium, barium, lanthanum, cerium, praseodymium, neodymium, mixed rare earth oxides, potassium, rubidium, cesium or mixtures thereof.

As described herein, the second metal, such as copper, may comprise an amount ranging from 0.5 to 10.0 weight percent of the total weight of the crystalline material. When the second metal comprises copper, it is typically used in an amount ranging from 0.5 to 10.0 weight percent of the total weight of the crystalline material, such as from 0.5 to 8.0 wt. %, from 0.5 to 6.0 wt. %, from 0.5 to 5.0 wt. %, from 1.0 to 8.0 wt. %, from 2.0 to 8.0 wt. %, and from 3.0 to 6.0 wt. %.

In one embodiment, the second metal of the material is copper, and the copper to aluminum atomic ratio is between 0.05 and 0.20.

The microporous crystalline material may also contain iron in an amount ranging from 0.5 to 10.0 weight percent of the total weight of the crystalline material.

When the second metal comprises iron, it is also typically used in an amount ranging from 0.5 to 10.0 weight percent of the total weight of the crystalline material such as from 0.5 to 8.0 wt. %, from 0.5 to 6.0 wt. %, from 0.5 to 5.0 wt. %, from 1.0 to 8.0 wt. %, from 2.0 to 8.0 wt. %, and from 3.0 to 6.0 wt. %.

In one embodiment, the second metal of the material is iron, and the iron to aluminum atomic ratio is between 0.05 and 0.30.

The first and second metals described above may be introduced into the microporous crystalline material by liquid-phase or solid ion-exchange, impregnation or incorporated by direct-synthesis.

However these first and second metals are introduced into the crystalline material, the resulting crystalline material may have a first metal to aluminum atomic ratio ranging from 0.04 to 0.85, such as from 0.05 to 0.80.

When the microporous crystalline material includes calcium, the resulting crystalline material may have a calcium to aluminum atomic ratio ranging from 0.04 to 0.60, such as from 0.05 to 0.50.

When the microporous crystalline material includes copper, the resulting crystalline material may have a copper to aluminum atomic ratio ranging from 0.04 to 0.30, such as from 0.05 to 0.20.

When the microporous crystalline material described herein includes iron as the second metal, the resulting crystalline material may have an iron to aluminum atomic ratio ranging from 0.04 to 0.40, such as from 0.05 to 0.30.

In one embodiment, the microporous crystalline material described herein is steamed at temperatures ranging from 400 to 600 °C in the presence of steam containing 1-100% water for a time of at least 0.1 hours in order to improve the stability towards immersion in water. After this treatment, the material may reach the desired NH₃/Al ratio of 0.7-0.9.

In one embodiment, the steam treatment temperature typically ranges from 400 to 600 °C, such as from 450 to 600 °C and from 500 to 600 °C.

In one embodiment, the water content in the steam during the steam treatment typically ranges from 1 to 100%, such as from 5 to 60% and from 10 to 20%.

In one embodiment, the time duration of the steam treatment is at least 0.1 hours and typically ranges from 0.5 to 16 hours, such as from 1 to 10 hours and from 1 to 3 hours.

The microporous crystalline material described herein has been shown to retain at least 80%, 85%, or 90%, or even 95% of its surface area after exposure to conditions that include immersion in water at ambient temperature for 1 hour.

The first metal, which includes, for example, magnesium, calcium, strontium, barium, lanthanum, cerium, praseodymium, neodymium, mixed rare earth oxides, potassium, rubidium, cesium or mixtures thereof, and second metals, e.g. copper or iron or mixtures thereof, can be introduced by liquid-phase or solid ion-exchange, impregnation or incorporated by direct-synthesis.

In one aspect, the first and second metals may be introduced into the material by liquid-phase or solid ion-exchange, impregnation or incorporated by direct-synthesis.

In one embodiment, the first metal comprises an amount of at least 0.2 weight percent of the total weight of the material, and in one embodiment, in an amount ranging from 0.1 to 6.0 weight percent, such as 0.2 to 5.0 weight percent. In one embodiment, the first metal comprises calcium in an amount ranging from 0.2 to 5.0 weight percent of the total weight of the crystalline material.

The atomic ratio of the first metal to aluminum may be between 0.05 and 0.80. In one embodiment, the first metal of the material is calcium, and the calcium to aluminum atomic ratio ranges from 0.04 to 0.60, such as from 0.05 and 0.50.

The material disclosed herein may be synthesized by a method comprising: mixing sources of sodium, potassium, alumina, silica, water and optionally a crystalline seed material to form a gel, wherein said gel has potassium to silica (K/SiO₂) molar ratio of less than 0.5 and hydroxide to silica (OH/SiO₂) molar ratio less than 0.35; heating said gel in a vessel at a temperature ranging from 80 to 200°C to form a crystalline product; ammonium-exchanging said product; and introducing first and second metals into the crystalline material by liquid-phase or solid ion-exchange, impregnation or incorporated by direct- synthesis.

In another embodiment, the method comprises a direct synthesis process such that the first and second metals are introduced into the crystalline material prior to crystallization.

In one embodiment, the alumina and silica sources disclosed comprise potassium-exchanged, proton-exchanged, ammonium-exchanged zeolite Y, potassium silicate or mixtures thereof.

There is also disclosed a method of selective catalytic reduction of nitrogen oxides in exhaust gas that utilizes the crystalline materials described herein. For example, an aspect of the disclosed method comprises at least partially contacting exhaust gases with an article comprising a microporous crystalline material having building units of double-6-rings *(d6r)* and pore opening of 8-rings, where the material has molar silica to alumina ratio (SAR) from 3 to 12, wherein the material exhibits an NH₃ adsorption capacity expressed as the molar NH₃/Al ratio of 0.7 to 0.9, wherein the material comprises a first metal chosen from alkali-earth group, rare-earth group, alkali group or mixtures thereof, and a second metal chosen from copper, iron or mixtures thereof.

The materials that can be used in this method are those that have the following structural codes CHA, LEV, AEI, AFT, AFX, EAB, ERI, KFI, SAT, TSC, and SAV, with the crystal structure CHA being particularly noted. The inventors have surprisingly discovered that materials after steam treatment exhibit excellent stability properties towards immersion in water. As a result, the materials described can be used in a method of selective catalytic reduction (SCR) of nitrogen oxides in exhaust gas because they exhibit excellent SCR properties, while retaining at least 80%, 85%, or 90%, or even 95% of its surface area after exposure to conditions that include immersion in water at ambient temperature for 1 hour.

As previously described, the disclosed microporous crystalline material may be steamed at temperatures ranging from 400 to 600 °C in the presence of steam containing 1-100% water for a time of at least 0.1 hours in order to improve the stability towards immersion in water. After this treatment, the material may reach the desired NH₃/Al ratio of 0.7-0.9.

In one embodiment, the steam treatment temperature typically ranges from 400 to 600 °C, such as from 450 to 600 °C and from 500 to 600 °C.

In one embodiment, the water content in the steam during the steam treatment typically ranges from 1 to 100%, such as from 5 to 60% and from 10 to 20%.

In one embodiment, the time duration of the steam treatment is at least 0.1 hours and typically ranges from 0.5 to 16 hours, such as from 1 to 10 hours and from 1 to 3 hours.

The inventors have also surprisingly discovered that these beneficial properties are at least somewhat a result of a first metal included in the microporous crystalline materials, including magnesium, calcium, strontium, barium, lanthanum, cerium, praseodymium, neodymium, mixed rare earth oxides, potassium, rubidium, cesium or mixtures thereof, and the second metal, which can be copper, iron or mixtures thereof. Whatever combination of first metals and second metals are chosen, that may be introduced into the microporous crystalline material by liquid-phase or solid ion-exchange, impregnation or incorporated by direct-synthesis.

The method of SCR described herein is performed after the first and second metals are introduced into the microporous crystalline material in certain desired ratios. For example, the resulting crystalline material may have a first metal to aluminum atomic ratio ranging from 0.04 to 0.85, such as from 0.05 to 0.80.

More specifically, the method of SCR described herein may be performed with a microporous crystalline material that includes calcium, and the resulting crystalline material may have a calcium to aluminum atomic ratio ranging from 0.04 to 0.60, such as from 0.05 to 0.50.

The method of SCR described herein may be performed with a microporous crystalline material that includes copper, and the resulting crystalline material may have a copper to aluminum atomic ratio ranging from 0.04 to 0.30, such as from 0.05 to 0.20.

The method of SCR described herein may be performed with a microporous crystalline material that includes iron, and the resulting crystalline material may have an iron to aluminum atomic ratio ranging from 0.04 to 0.40, such as from 0.05 to 0.30.

In one embodiment, the contacting step in the method of SCR may be performed in the presence of ammonia, urea or an ammonia generating compound.

In another embodiment, the contacting step in the method of SCR may be performed in the presence of hydrocarbon compound.

There is also disclosed a method of making a microporous crystalline material, as described herein. In one embodiment, the method comprises synthesizing a material having building units of double-6-rings *(d6r)* and pore opening of 8-rings, where the material has molar silica to alumina ratio (SAR) from 3 to 12, wherein the material exhibits an NH₃ adsorption capacity expressed as the molar NH₃/Al ratio of 0.7 to 0.9;
mixing sources of sodium, potassium, alumina, silica, water and
optionally an organic template to form a gel;
heating the gel in a vessel at a temperature ranging from 80 to 200 °C
to form a crystalline material;
ammonium-exchanging said material;
introducing a first metal chosen from alkali-earth group, rare-earth group, alkali group or mixtures thereof, and a second metal chosen from copper, iron or mixtures thereof, into the crystalline material by liquid-phase ion-exchange, solid ion-exchange, or impregnation; and
steaming said material at 400 to 600 °C in 1 to 100% steam for at least 0.1 hours.

The material may be synthesized by a process free of organic structure directing agent (OSDA).

In one embodiment, the gel has a potassium to silica (K/SiO₂) molar ratio of less than 0.75, such as less than 0.5 and hydroxide to silica (OH/SiO₂) molar ratio less than 0.50, such as less than 0.35.

In an embodiment, the method may further comprise adding a crystalline seed material to the gel.

In an embodiment, the first metal and the second metal are incorporated into the structure by direct-synthesis prior to heating the gel.

In one embodiment, alumina and silica sources comprise potassium-exchanged, proton-exchanged, ammonium-exchanged zeolite Y, potassium silicate or mixtures thereof.

The method of making a microporous crystalline material, may also include the various elements, in the defined amounts and ratios, as described herein.

The materials that can be used in this method are those that have the following structural codes CHA, LEV, AEI, AFT, AFX, EAB, ERI, KFI, SAT, TSC, and SAV, with the crystal structure CHA being particularly noted. The inventors have surprisingly discovered that materials encompassed by the CHA crystal structure, that have a unit cell angle below 94.55 degrees, such as a unit cell angle ranging from 94.30-94.50 degrees, and that may also have a [3 2 0] peak below 36.05 degrees 2-theta, exhibit excellent stability properties, even at high temperatures. The desired unit cell angle and [3 2 0] peak position may be obtained by steaming the material described herein at temperatures ranging from 400 to 800 °C in the presence of steam containing 1-100% water for a time of at least 0.1 hours.

As previously described, the disclosed microporous crystalline material may be steamed at temperatures ranging from 400 to 600 °C, such as from 450 to 600 °C, or even from 500 to 600 °C, in the presence of steam containing 1-100% water, such as from 5 to 60%, or from 10 to 20%, for a time of at least 0.1 hours, such as from 0.5 to 16 hours, from 1 to 10 hours, or from 1 to 3 hours, in order to improve the stability towards immersion in water. After this treatment, the material may reach the desired NH₃/Al ratio of 0.7-0.9.

These materials retaining at least 80%, 85%, or 90%, or even 95% of its surface area after exposure to conditions that include immersion in water at ambient temperature for 1 hour. These metals, in addition to the second metals, which are chosen from copper, iron or mixtures thereof, may be introduced into the microporous crystalline material by liquid-phase or solid ion-exchange, impregnation or incorporated by direct-synthesis.

However these first and second metals are introduced, the resulting crystalline material may have a first metal to aluminum atomic ratio ranging from 0.04 to 0.85, such as from 0.05 to 0.80.

The microporous crystalline material described herein may include calcium, and the resulting crystalline material may have a calcium to aluminum atomic ratio ranging from 0.04 to 0.60, such as from 0.05 to 0.50.

The microporous crystalline material described herein may include copper, and the resulting crystalline material may have a copper to aluminum atomic ratio ranging from 0.04 to 0.30, such as from 0.05 to 0.20.

The microporous crystalline material described herein may include iron, and the resulting crystalline material may have an iron to aluminum atomic ratio ranging from 0.04 to 0.40, such as from 0.05 to 0.30.

As mentioned, the material used in the described method may comprise a crystal structure having building units of double-6-rings (d6r) and pore opening of 8 rings as exemplified with framework types defined by the Structure Commission of the International Zeolite Association having structural codes of CHA, LEV, AEI, AFT, AFX, EAB, ERI, KFI, SAT, TSC, and SAV, with a particular emphasis on CHA.

The morphology and crystallite size of the material according to the present disclosure are determined using scanning electron microscopy (SEM). In one embodiment, the mean particle size of the inventive material as measured by SEM is greater than 0.30 microns, such as greater than 1.0 microns, and less than 5 microns. In various embodiments, the mean crystallite size is greater than 0.5 micrometers. In one embodiment, the material used in the disclosed method comprises crystals in size ranging from 0.3 and 5 microns.

### EXAMPLES

The following non-limiting examples, which are intended to be exemplary, further clarify the present disclosure.

### Reference Example 1 (large crystal organic-free chabazite synthesis)

Deionized water, potassium hydroxide solution (45 wt% KOH) and potassium-exchanged zeolite Y powder were mixed together to form a gel with the following composition: 5.5 SiO₂: 1.0 Al₂O₃:1.09 K₂O: 66 H₂O. This gel composition had an OH/SiO₂ ratio of 0.05. The gel was stirred at room temperature for about 30 minutes. Then 1.5 wt% of chabazite seeds were added, and it was stirred for another 30 min. The gel was then charged to an autoclave. The autoclave was heated to 120 °C and maintained at the temperature for 60 hours while stirring at 300 rpm. After cooling, the product was recovered by filtration and washed with deionized water. The resulting product had the XRD pattern of chabazite, an SAR of 5.5 and contained 16.5 wt% K₂O. The product was exchanged with ammonium nitrate four times to reduce the potassium content to 0.27 wt% K₂O.

### Reference Example 2 (Ca-exchange of ammonium exchanged chabazite)

The sample from Reference Example 1 was subsequently exchanged with calcium nitrate at 80 °C for 2 hours. Following the exchange, the material was filtered, washed with deionized water and then dried.

### Reference Example 3 (Fe-exchange of Ca-chabazite)

The calcium-exchanged chabazite sample from Reference Example 2 was exchanged with ferrous sulfate at ambient temperature for 3 hours. After filtering, washing and drying the sample contained 2.5 wt% CaO and 5.2 wt% Fe₂O₃.

### Reference Example 4 (large crystal organic-free chabazite synthesis)

Deionized water, potassium hydroxide solution (45 wt% KOH) and potassium-exchanged zeolite Y powder were mixed together to form a gel with the following composition: 5.5 SiO₂: 1.0 Al₂O₃: 1.02 K₂O: 66 H₂O. This gel composition had an OH/SiO₂ ratio of 0.025. The gel was stirred at room temperature for about 30 minutes. Next 0.5 wt% of chabazite seeds were added and stirred for another 30 minutes. The gel was then charged to an autoclave. The autoclave was heated to 140 °C and maintained at the temperature for 36 hours while stirring at 300 rpm. After cooling, the product was recovered by filtration and washed with deionized water. The resulting product had the XRD pattern of chabazite, an SAR of 5.6 and contained 16.7 wt% K₂O. The product was exchanged with ammonium nitrate twice to reduce the potassium content to 2.0 wt% K₂O.

### Reference Example 5 (Ca-exchange of ammonium exchanged chabazite)

The sample from Reference Example 4 was subsequently exchanged with calcium nitrate at 80 °C for 2 hours. Following the exchange, the material was filtered, washed with deionized water and then dried.

### Reference Example 6 (Cu-exchange of Ca-chabazite)

The calcium-exchanged chabazite sample from Reference Example 5 was exchanged with copper nitrate at 60 °C for 2 hours. After filtering, washing and drying the sample contained 2.9 wt% CaO and 5.4 wt% CuO.

### Reference Example 7 (Cu-exchange of Ca-chabazite)

The calcium-exchanged chabazite sample from Reference Example 5 was exchanged with copper nitrate at 60 °C for 2 hours. After filtering, washing and drying the sample contained 3.1 wt% CaO and 3.2 wt% CuO.

### SAMPLE PERFORMANCE EVALUATION

The surface area of the materials before and after treatments was measured using nitrogen gas adsorption following the BET method. A Quantachrome Autosorb unit was used for these measurements, and the data was collected between relative pressures (P/P₀) of 0.01 and 0.05 at liquid nitrogen temperatures.

The nitrogen adsorption data collected at the same time as the surface area measurement were also used to calculate the micropore volume of the materials using the t-plot method.

The activities of the hydrothermally aged materials for NOₓ conversion, using NH₃ as reductant, were tested with a flow-through type reactor. Powder zeolite samples were pressed and sieved to 35/70 mesh and loaded into a quartz tube reactor. The gas composition for NH₃-SCR was 500 ppm NO, 500 ppm NH₃, 5 vol% O₂, 0.6% H₂O and balance N₂. The space velocity was 50,000 h⁻¹. Reactor temperature was ramped and NO conversion was determined with an MKS MultiGas infrared analyzer at each temperature interval.

### Example 8 (steam treatment of Cu-Ca-chabazite)

This Example comprised the Cu-exchanged Ca-chabazite material from Reference Example 6 that was treated in 60% water/air at 600 °C for 2 h.

### Comparable Example 9 (calcination of Cu-Ca-chabazite)

This Example comprised the Cu-exchanged Ca-chabazite material from Reference Example 6 that was calcined in air at 550 °C for 2 h.

### Example 10 (steam treatment of Cu-Ca-chabazite)

This Example comprised the Cu-exchanged Ca-chabazite material from Reference Example 7 that was treated in 60% water/air at 600 °C for 2 h.

### Comparable Example 11 (calcination of Cu-Ca-chabazite)

This Example comprised the Cu-exchanged Ca-chabazite material from Reference Example 7 that was calcined in air at 550 °C for 2 h.

### Example 12 (steam treatment of Fe-Ca-chabazite)

This Example comprised the Fe-exchanged Ca-chabazite material from Reference Example 3 that was treated in 20% water/air at 600 °C for 2 h.

### Comparable Example 13 (calcination of Fe-Ca-chabazite)

This Example comprised the Fe-exchanged Ca-chabazite material from Reference Example 3 that was calcined in air at 550 °C for 2 h.

### WATER STABILITY TEST

Water stability tests were done by slurrying 4 g of material in 12 g of water for 1 hour at ambient temperature. Subsequently, the slurry was filtered, washed and dried. The surface area and micropore volume of the materials were analyzed before and after the water treatment. Results for Examples 8, 10 and 12 as well as Comparable Examples 9, 11 and 13 are shown in Table 1.

**Table 1**

| **Example** | **Ex. 8** | **Comp. Ex. 9** | **Ex. 10** | **Comp. Ex. 11** | **Ex. 12** | **Comp. Ex. 13** |
|---|---|---|---|---|---|---|
| Initial surface area (m²/g) | 630 | 641 | 620 | 589 | 610 | 619 |
| Surface area after water treatment (m²/g) | 626 | 454 | 608 | 455 | 612 | 374 |
| Surface area retention (%) | 99 | 71 | 98 | 77 | 100 | 60 |
| Initial micropore volume (cc/g) | 0.24 | 0.24 | 0.23 | 0.22 | 0.23 | 0.23 |
| Micropore volume after water treatment (cc/g) | 0.24 | 0.17 | 0.23 | 0.17 | 0.23 | 0.14 |

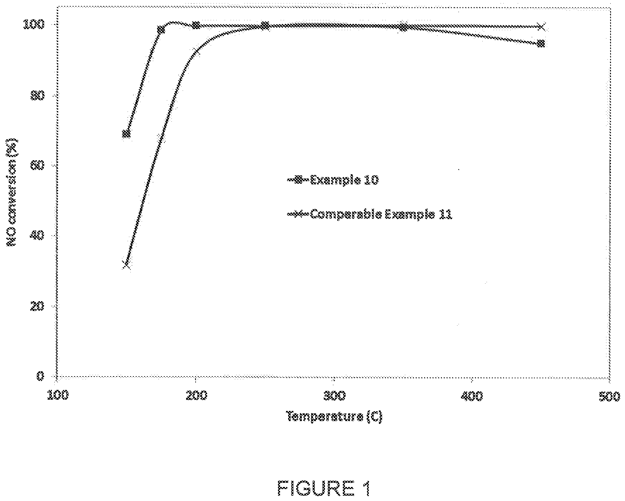

Fig. 1 compares NO conversion percent after water immersion of Example 10 and Comparable Example 11, and the inventive example shows a higher NO conversion percent at lower temperature. The conversion percent for both materials remains essentially constant up to about 400 °C.

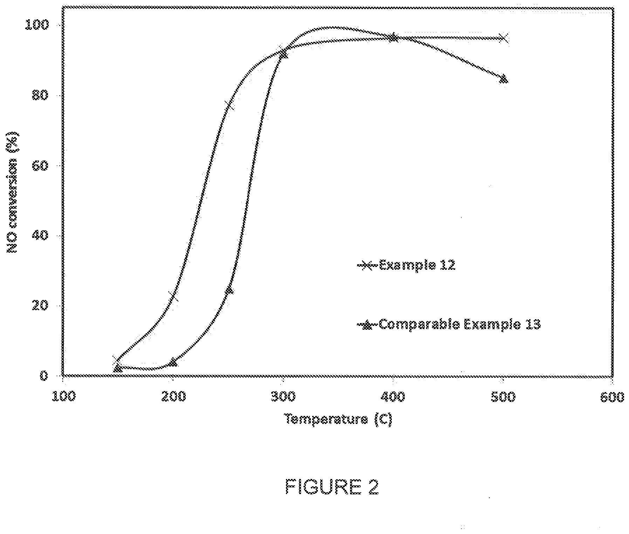

Fig. 2 compares NO conversion percent after water immersion of Example 12 and Comparable Example 13. This Figure graphically shows that the inventive example exhibits a higher NO conversion percent at lower temperature, and a more stable NO conversion percent at higher temperatures.

### Example 14 (Exchange to make Cu-Ca-chabazite)

The calcium-exchanged chabazite sample from Reference Example 5 was exchanged with copper nitrate at 60 °C for 2 hours. After filtering, washing and drying the sample contained 3.6 wt% CaO and 2.6 wt% CuO.

### Example 15 (steam treatment of Cu-Ca-chabazite)

This Example comprised the Cu-exchanged Ca-chabazite material from Example 14 that was treated in 60% H₂O/air at 600 °C for 2 hours.

### Example 16 (steam treatment of Cu-Ca-chabazite)

This Example comprised the Cu-exchanged Ca-chabazite material from Example 14 that was treated in 20% H₂O/air at 500 °C for 2 hours.

### Comparable Example 17 (calcination of Cu-Ca-chabazite)

This Example comprised the Cu-exchanged Ca-chabazite material from Example 14 that was calcined in air at 550 °C for 2 hours.

### Comparable Example 18 (steam treatment of Cu-Ca-chabazite)

This Example comprised the Cu-exchanged Ca-chabazite material from Reference Example 6 that was treated in 10% H₂O/air at 750 °C for 16 hours.

### Comparable Example 19 (calcination of Cu-Ca-chabazite)

This Example comprised the Cu-exchanged Ca-chabazite material from Reference Example 6 that was calcined in air at 550 °C for 2 hours.

The surface area and micropore volume of Examples 15 and 16 as well as of comparable Example 17 were analyzed before and after the water treatment. Results are shown in Table 2.

**Table 2**

| **Example** | **Ex. 15** | **Ex. 16** | **Comp. Ex. 17** |
|---|---|---|---|
| Initial surface area (m²/g) | 621 | 646 | 638 |
| Surface area after water treatment (m²/g) | 610 | 641 | 500 |
| Surface area retention (%) | 98 | 99 | 78 |
| Initial micropore volume (cc/g) | 0.24 | 0.24 | 0.24 |
| Micropore volume after water treatment (cc/g) | 0.23 | 0.24 | 0.18 |

The amount of NH₃ adsorbed, the NH₃ adsorption capacity, was measured using a NH₃ temperature programmed desorption (NH₃-TPD) technique. Prior to NH₃-TPD, materials were heated *in situ* in argon at 10 °C/min to 520 °C and kept at this temperature for 1 hour. The furnace was then cooled to 100 °C. NH₃ was adsorbed onto the zeolite at 100 °C for 1 hour using 2000 ppm NH₃/N₂, followed by flowing argon for 1 hour to remove physisorbed NH₃. During the NH₃-TPD, a ramping rate of 10 °C/min from 100 to 650 °C was used while flowing argon and monitoring the thermal conductivity of the outlet gas. The NH₃ adsorption capacity for Examples 15-17 expressed in mmol NH₃/g zeolite and in molar NH₃/Al ratios are shown in Table 3. The NH₃ adsorption capacity is also expressed as NH₃ retention, i.e. the ratio between the NH₃ capacity after steam treatment and the NH₃ capacity after calcination.

**Table 3**

| **Example** | **Ex. 15** | **Ex. 16** | **Comp. Ex. 17** | **Comp. Ex. 18** | **Comp. Ex. 19** |
|---|---|---|---|---|---|
| Calcination temperature (C) | | | 550 | | 550 |
| Steaming temperature (C) | 600 | 500 | | 750 | |
| NH₃ adsorption capacity (mmol/g) | 3.13 | 3.50 | 4.91 | 2.67 | 5.20 |
| NH₃/Al molar ratio | 0.74 | 0.82 | 1.16 | 0.64 | 1.25 |
| NH₃ retention (%) | 64 | 71 | n/a | 51 | n/a |

Examples 15 and 16 have lower NH₃ adsorption capacity after steam treatments (3.13 and 3.50 mmol/g) compared with the calcined material in Comparable Example 17 (4.91 mmol/g). These NH₃ adsorption capacities for Examples 15 and 16 correspond to NH₃ retention values of 64 and 71% relative to the calcined material. The data in Table 3 indicate that the steamed materials with lower NH₃ adsorption capacity have higher surface area retention in Table 2 and hence sustain less damage during water exposure than the calcined materials.

The NH₃ retention values for Examples 15 and 16 (64 and 71%, respectively) are higher than those for samples steamed at higher temperatures, such as Comparable Example 18 (51%) steamed at 750 C, 16 h (see Table 3). In conjunction, the NH₃/Al ratios are also higher for Examples 15 and 16 (0.74 and 0.82 NH₃/Al) than for Comparable Example 18 steamed at 750 C (0.64 NH₃/Al). The calcined material Comparable Example 17 has a NH₃/Al ratio of 1.16, a value high enough to sustain damage during the water exposure test in Table 2. NH₃/Al ratios and NH₃ retention values that are low enough to avoid low-temperature water damage, but high enough to retain as much of the good SCR performance of the starting material are preferred. In one embodiment, the preferred NH₃/Al ratio range is 0.7 to 1.0, such as 0.7 to 0.9. In one embodiment, the preferred NH₃ retention range is 60-90%, such as 60-80%.

Examples 14-16 and Comparable Example 17 were also analyzed by powder X-ray diffraction (XRD). Powder XRD data were collected on a Panalytical Empyrean diffractometer operating at 45 kV and 40 mA. The XRD patterns were recorded from 27 to 37 degrees 2-theta using a step size of 0.007 degrees 2-theta and 3 s hold time per step. Si 640d from NIST was added as an internal peak position standard to adjust for variations in peak positions due to differences in sample alignment; the peak at 28.44 degrees 2-theta for Si 640d was used for this correction. The main peak positions in the 27 to 37 degrees 2-theta range are shown in Table 4. The six different peaks in Table 4 correspond to Miller indices [h k l] of [2 1 -2], [2 2 0], [3 -1 -1], [3 -1 -2], [3 1 -2] and [3 2 0]. These data were further fitted in the rhombohedral space group to obtain the unit cell distance and angle.

For Examples 15 and 16, the [3 2 0] peak shifts to lower angles (36.02-36.03 degrees 2-theta) after steam treatments compared with the calcined material in Comparable Example 17 and the starting material in Example 14 (both 36.07 degrees 2-theta) (Table 4). The unit cell angle also decreases upon steaming from 94.61 degrees in Example 14 and 94.58 degrees in Comparable Example 17 to 94.42 and 94.43 degrees in Examples 15 and 16, respectively. The data in Table 4 indicate that the steamed materials with lower angle of the [3 2 0] peak and lower unit cell angle have higher surface area retention and hence sustain less damage during water exposure than the calcined material.

**Table 4**

| **Example** | **[h k l]** | **Units** | **Ex. 14** | **Ex. 15** | **Ex. 16** | **Comp. Ex. 17** |
|---|---|---|---|---|---|---|
| Peak position | [2 1 -2] | degrees 2-theta | 27.53 | 27.60 | 27.62 | 27.60 |
| Peak position | [2 2 0] | degrees 2-theta | 28.20 | 28.17 | 28.20 | 28.28 |
| Peak position | [3 -1 -1] | degrees 2-theta | 30.48 | 30.57 | 30.57 | 30.55 |
| Peak position | [3 -1 -2] | degrees 2-theta | 34.35 | 34.45 | 34.45 | 34.42 |
| Peak position | [3 1 -2] | degrees 2-theta | 34.83 | 34.89 | 34.90 | 34.90 |
| Peak position | [3 2 0] | degrees 2-theta | 36.07 | 36.03 | 36.02 | 36.07 |
| | | | | | | |
| Unit cell distance | | Å | 9.391 | 9.380 | 9.377 | 9.374 |
| Unit cell angle | | degrees | 94.61 | 94.42 | 94.43 | 94.58 |

It is appreciated that the materials described herein may be used in article, such as one in the form of a channeled or honeycombed-shaped body; a packed bed, such as balls, pebbles, pellets, tablets, extrudates, other particles, or combinations thereof; microspheres; or structural pieces, such as in the form of plates or tubes.

As one skilled in the art would appreciate, the channeled or honeycombed-shaped body or structural piece is formed by wash-coating said crystalline material onto a preformed honeycombed-shaped body or by extruding a mixture comprising the said crystalline material.

## Claims

1. A microporous crystalline material having building units of double-6-rings *(d6r)* and pore opening of 8-rings, wherein the material comprises a first metal chosen from alkali-earth group, rare-earth group, alkali group or mixtures thereof, and a second metal chosen from copper, iron or mixtures thereof,
wherein the material has a molar silica to alumina ratio (SAR) from 3 to 12; and
exhibits an NH₃ adsorption capacity expressed as the molar NH₃/Al ratio of 0.7 to 0.9, wherein the material comprises structural codes of CHA, LEV, AEI, AFT, AFX, EAB, ERI, KFI, SAT, TSC, and SAV.

2. The microporous crystalline material of claim 1, wherein the material has pore openings ranging from 3 to 5 Angstroms and a mean crystal size ranging from 0.3 to 5 microns.

3. The microporous crystalline material of claim 1, wherein the material comprises a CHA structure.

4. The microporous crystalline material of claim 3, wherein the CHA structure has a unit cell angle below 94.55 degrees, and a [3 2 0] peak below 36.05 degrees 2-theta.

5. The microporous crystalline material of claim 3, wherein the CHA structure has a unit cell angle ranging from 94.30-94.50 degrees.

6. The microporous crystalline material of claim 1, where the first metal comprises magnesium, calcium, strontium, barium, lanthanum, cerium, praseodymium, neodymium, mixed rare earth oxides, potassium, rubidium, cesium or mixtures thereof.

7. The microporous crystalline material of claim 1, which has a first metal to aluminum atomic ratio ranging from 0.05 to 0.80;
wherein when the first metal comprises calcium, the material has a calcium to aluminum atomic ratio ranging from 0.05 to 0.50;
wherein when the second metal comprises copper, the material has a copper to aluminum atomic ratio ranging from 0.05 to 0.20; and
wherein when the second metal comprises iron, the material has an iron to aluminum atomic ratio ranging from 0.05 to 0.30.

8. The microporous crystalline material of claim 1, wherein the material retains at least 80% of its surface area after exposure to conditions that include immersion in water at ambient temperature for 1 hour.

9. A method of selective catalytic reduction of nitrogen oxides in exhaust gas, said method comprising:
at least partially contacting said exhaust gases with an article comprising a microporous crystalline material having building units of double-6-rings (d6r) and pore opening of 8-rings, wherein the material comprises a first metal chosen from alkali-earth group, rare-earth group, alkali group or mixtures thereof, and a second metal chosen from copper, iron or mixtures thereof,
wherein the material has a molar silica to alumina ratio (SAR) from 3 to 12; and
exhibits an NH₃ adsorption capacity expressed as the molar NH₃/Al ratio of 0.7 to 0.9, wherein the material comprises structural codes of CHA, LEV, AEI, AFT, AFX, EAB, ERI, KFI, SAT, TSC, and SAV.

10. The method of claim 9, wherein the material comprises a CHA structure having a unit cell angle below 94.55 degrees, and a [3 2 0] peak below 36.05 degrees 2-theta.

11. The method of claim 9, wherein the contacting step is performed in the presence of ammonia, urea, an ammonia generating compound, or a hydrocarbon compound.

12. A method of making a microporous crystalline material,
said method comprising synthesizing a material having building units of double-6-rings *(d6r)* and pore opening of 8-rings, where the material has molar silica to alumina ratio (SAR) from 3 to 12, wherein the material exhibits an NH₃ adsorption capacity expressed as the molar NH₃/Al ratio of 0.7 to 0.9;
mixing sources of sodium, potassium, alumina, silica, water and optionally an organic template to form a gel;
heating the gel in a vessel at a temperature ranging from 80 to 200 °C to form a crystalline material;
ammonium-exchanging said material;
introducing a first metal chosen from alkali-earth group, rare-earth group, alkali group or mixtures thereof, and a second metal chosen from copper, iron or mixtures thereof, into said crystalline material by liquid- phase or solid ion-exchange, impregnation; and
steaming said material at 400 to 600 °C in 1 to 100% steam for at least 0.1 hour, to produce a microporous crystalline material having a crystal structure comprising a structural code chosen from CHA, LEV, AEI, AFT, AFX, EAB, ERI, KFI, SAT, TSC, and SAV

13. The method of claim 12, wherein the gel has potassium to silica (K/SiO₂) molar ratio of less than 0.5 and hydroxide to silica (OH/SiO₂) molar ratio less than 0.35.

14. The method of claim 9 or 12, where said first metal comprises magnesium, calcium, strontium, barium, lanthanum, cerium, praseodymium, neodymium, mixed rare earth oxides, potassium, rubidium, cesium, or mixtures thereof.

15. The method of claim 9 or 12, wherein the material exhibits a first metal to aluminum atomic ratio ranges from 0.05 to 0.80, wherein when
the first metal comprises calcium the material has a calcium to aluminum atomic ratio ranging from 0.05 to 0.50; wherein when
the second metal comprises copper the material has a copper to aluminum atomic ratio ranging from 0.05 to 0.20; and wherein when
the second metal comprises iron the material has an iron to aluminum atomic ratio ranging from 0.05 to 0.30.

## Patentansprüche

1. Mikroporöses, kristallines Material mit Baueinheiten aus Doppel-6-Ringen (d6r) und einer Porenöffnung aus 8-Ringen, wobei das Material ein erstes Metall umfasst, das ausgewählt ist aus Erdalkaligruppe, Seltenerdgruppe, Alkaligruppe oder Gemischen davon, und ein zweites Metall, das ausgewählt ist aus Kupfer, Eisen oder Gemischen davon,
wobei das Material ein molares Verhältnis von Siliziumoxid zu Aluminiumoxid (SAR) von 3 bis 12 aufweist; und
eine NH₃-Adsorptionskapazität von 0,7 bis 0,9 ausgedrückt als das NH₃/Al-Verhältnis aufweist, wobei das Material die Strukturcodes von CHA, LEV, AEI, AFT, AFX, EAB, ERI, KFI, SAT, TSC und SAV umfasst.

2. Mikroporöses, kristallines Material nach Anspruch 1, wobei das Material Porenöffnungen von 3 bis 5 Angstrom Angström und eine mittlere Kristallgröße von 0,3 bis 5 Mikron aufweist.

3. Mikroporöses, kristallines Material nach Anspruch 1, wobei das Material eine CHA-Struktur aufweist.

4. Mikroporöses, kristallines Material nach Anspruch 3, wobei die CHA-Struktur einen Elementarzellenwinkel von unter 94,55 Grad und eine [3 2 0]-Spitze von unter 36,05 Grad 2-Theta aufweist.

5. Mikroporöses, kristallines Material nach Anspruch 3, wobei die CHA-Struktur einen Elementarzellenwinkel von 94,30 bis 94,50 Grad aufweist.

6. Mikroporöses, kristallines Material nach Anspruch 1, wobei das erste Metall Magnesium, Kalzium, Strontium, Barium, Lanthan, Cer, Praseodym, Neodym, gemischte Seltenerdoxide, Kalium, Rubidium, Cäsium oder Gemische davon umfasst.

7. Mikroporöses, kristallines Material nach Anspruch 1, das ein Atomverhältnis des ersten Metalls zu Aluminium von 0,05 bis 0,80 aufweist;
wobei, wenn das erste Metall Kalzium umfasst, das Material ein Atomverhältnis von Kalzium zu Aluminium von 0,05 und 0,50 aufweist;
wobei, wenn das zweite Metall Kupfer umfasst, das Material ein Atomverhältnis von Kupfer zu Aluminium von 0,05 bis 0,20 aufweist; und
wobei, wenn das zweite Metall Eisen umfasst, das Material ein Atomverhältnis von Eisen zu Aluminium von 0,05 bis 0,30 aufweist.

8. Mikroporöses, kristallines Material nach Anspruch 1, wobei das Material, nachdem es Bedingungen ausgesetzt worden ist, die Eintauchen in Wasser über 1 Stunde bei Umgebungstemperatur umfassen, mindestens 80% seines Oberflächenbereichs beibehält.

9. Verfahren zur selektiven katalytischen Reduzierung von Stickstoffoxiden in Abgas, wobei das Verfahren folgendes umfasst:
zumindest teilweises Inkontaktbringen der Abgase mit einem Artikel, der ein mikroporöses, kristallines Material mit Baueinheiten aus Doppel-6-Ringen (d6r) und einer Porenöffnung aus 8-Ringen, wobei das Material ein erstes Metall umfasst, das ausgewählt ist aus Erdalkaligruppe, Seltenerdgruppe, Alkaligruppe oder Gemischen davon, und ein zweites Metall, das ausgewählt ist aus Kupfer, Eisen oder Gemischen davon,
wobei das Material ein molares Verhältnis von Siliziumoxid zu Aluminiumoxid (SAR) von 3 bis 12 aufweist; und
eine NH₃-Adsorptionskapazität von 0,7 bis 0,9 ausgedrückt als das NH₃/Al-Verhältnis aufweist, wobei das Material die Strukturcodes von CHA, LEV, AEI, AFT, AFX, EAB, ERI, KFI, SAT, TSC und SAV umfasst.

10. Verfahren nach Anspruch 9, wobei das Material eine CHA-Struktur einen Elementarzellenwinkel von unter 94,55 Grad und eine [3 2 0]-Spitze von unter 36,05 Grad 2-Theta aufweist.

11. Verfahren nach Anspruch 9, wobei der Schritt des Inkontaktbringens in Gegenwart von Ammoniak, Harnstoff, einer Ammoniak erzeugenden Verbindung oder einer Kohlenwasserstoffverbindung ausgeführt wird.

12. Verfahren zur Herstellung eines mikroporösen, kristallinen Materials,
wobei das Verfahren das Synthetisieren eines Materials mit Baueinheiten aus Doppel-6-Ringen (d6r) und einer Porenöffnung aus 8-Ringen umfasst, wobei das Material ein molares Verhältnis von Siliziumoxid zu Aluminiumoxid (SAR) von 3 bis 12 aufweist, wobei das Material eine NH₃-Adsorptionskapazität von 0,7 bis 0,9 ausgedrückt als das NH₃/Al-Verhältnis aufweist;
Mischen von Ausgangsstoffen von Natrium, Kalium, Siliziumoxid, Wasser und optional einer organischen Matrize, um ein Gel zu bilden;
Erhitzen des Gels in einem Gefäß auf eine Temperatur von 80 bis 200 °C, um ein kristallines Material zu bilden;
Bewirken eines Ammoniakaustauschs des Materials;
Einführen eines ersten Metalls, das ausgewählt ist aus Erdalkaligruppe, Seltenerdgruppe, Alkaligruppe oder Gemischen davon, und eines zweiten Metalls, das ausgewählt ist aus Kupfer, Eisen oder Gemischen davon, in das kristalline Material durch Flüssigphasen- oder festen lonenaustausch, Imprägnierung; und
Dampfbehandeln des Materials bei 400 bis 600 °C über mindestens 0,1 Stunden in 1 bis 100% Dampf, um ein mikroporöses, kristallines Material mit einer Kristallstruktur zu erzeugen, die einen Strukturcode umfasst, der ausgewählt ist aus CHA, LEV, AEI, AFT, AFX, EAB, ERI, KFI, SAT, TSC und SAV.

13. Verfahren nach Anspruch 12, wobei das Gel ein molares Verhältnis von Kalium zu Siliziumoxid (K/SiO₂) von unter 0,5 und ein molares Verhältnis von Hydroxid zu Siliziumoxid (OH/SiO₂) von unter 0,35 umfasst.

14. Verfahren nach Anspruch 9 oder 12, wobei das erste Metall Magnesium, Kalzium, Strontium, Barium, Lanthan, Cer, Praseodym, Neodym, gemischte Seltenerdoxide, Kalium, Rubidium, Cäsium oder Gemische davon umfasst.

15. Verfahren nach Anspruch 9 oder 12, wobei das Material ein Atomverhältnis des ersten Metalls zu Aluminium von 0,05 bis 0,80 aufweist; wobei, wenn
das erste Metall Kalzium umfasst, das Material ein Atomverhältnis von Kalzium zu Aluminium von 0,05 und 0,50 aufweist; wobei, wenn
das zweite Metall Kupfer umfasst, das Material ein Atomverhältnis von Kupfer zu Aluminium von 0,05 bis 0,20 aufweist; und wobei, wenn
das zweite Metall Eisen umfasst, das Material ein Atomverhältnis von Eisen zu Aluminium von 0,05 bis 0,30 aufweist.

## Revendications

1. Matériau cristallin microporeux ayant des unités de construction de doubles cycles à 6 chaînons (d6r) et une ouverture de pores de cycles à 8 chaînons, le matériau comprenant un premier métal choisi dans le groupe alcalino-terreux, le groupe des terres rares, le groupe alcalin ou des mélanges de ceux-ci, et un deuxième métal choisi parmi le cuivre, le fer et des mélanges de ceux-ci,
le matériau ayant un rapport molaire silice sur alumine (SAR) de 3 à 12 ; et
présentant une capacité d'adsorption de NH₃ exprimée en tant que rapport molaire NH₃/Al de 0,7 à 0,9, le matériau comprenant les codes structuraux de CHA, LEV, AEI, AFT, AFX, EAB, ERI, KFI, SAT, TSC et SAV.

2. Matériau cristallin microporeux selon la revendication 1, le matériau ayant des ouvertures de pores allant de 3 à 5 Angströms et une taille moyenne de cristaux allant de 0,3 à 5 microns.

3. Matériau cristallin microporeux selon la revendication 1, le matériau comprenant une structure CHA.

4. Matériau cristallin microporeux selon la revendication 3, la structure CHA ayant un angle de cellule unitaire inférieur à 94,55 degrés, et un pic [3 2 0] inférieur à 36,05 degrés 2-thêta.

5. Matériau cristallin microporeux selon la revendication 3, la structure CHA ayant un angle de cellule unitaire allant de 94,30 à 94,50 degrés.

6. Matériau cristallin microporeux selon la revendication 1, le premier métal comprenant du magnésium, du calcium, du strontium, du baryum, du lanthane, du cérium, du praséodyme, du néodyme, des oxydes de terres rares mélangés, du potassium, du rubidium, du césium ou des mélanges de ceux-ci.

7. Matériau cristallin microporeux selon la revendication 1, qui a un rapport atomique premier métal sur aluminium allant de 0,05 à 0,80 ;
lorsque le premier métal comprend du calcium, le matériau ayant un rapport atomique calcium sur aluminium allant de 0,05 à 0,50 ;
lorsque le deuxième métal comprend du cuivre, le matériau ayant un rapport atomique cuivre sur aluminium allant de 0,05 à 0,20 ; et
lorsque le deuxième métal comprend du fer, le matériau ayant un rapport atomique fer sur aluminium allant de 0,05 à 0,30.

8. Matériau cristallin microporeux selon la revendication 1, le matériau conservant au moins 80 % de son aire de surface après une exposition à des conditions qui incluent une immersion dans de l'eau à température ambiante pendant 1 heure.

9. Procédé de réduction catalytique sélective d'oxydes d'azote dans un gaz d'échappement, ledit procédé comprenant les étapes consistant à :
mettre au moins partiellement en contact lesdits gaz d'échappement avec un article comprenant un matériau cristallin microporeux ayant des unités de construction de doubles cycles à 6 chaînons (*d6r*) et une ouverture de pores de cycles à 8 chaînons, le matériau comprenant un premier métal choisi dans le groupe alcalino-terreux, le groupe des terres rares, le groupe alcalin ou des mélanges de ceux-ci, et un deuxième métal choisi parmi le cuivre, le fer et des mélanges de ceux-ci,
le matériau ayant un rapport molaire silice sur alumine (SAR) de 3 à 12 ; et
présentant une capacité d'adsorption de NH₃ exprimée en tant que rapport molaire NH₃/Al de 0,7 à 0,9, le matériau comprenant les codes structuraux de CHA, LEV, AEI, AFT, AFX, EAB, ERI, KFI, SAT, TSC et SAV.

10. Procédé selon la revendication 9, le matériau comprenant une structure CHA ayant un angle de cellule unitaire inférieur à 94,55 degrés, et un pic [3 2 0] inférieur à 36,05 degrés 2-thêta.

11. Procédé selon la revendication 9, l'étape consistant à mettre en contact étant réalisée en présence d'ammoniac, d'urée, d'un composé générant de l'ammoniac, ou d'un composé hydrocarboné.

12. Procédé de fabrication d'un matériau cristallin microporeux,
ledit procédé comprenant l'étape consistant à synthétiser un matériau ayant des unités de construction de doubles cycles à 6 chaînons (*d6r*) et une ouverture de pores de cycles à 8 chaînons, le matériau ayant un rapport molaire silice sur alumine (SAR) de 3 à 12, le matériau présentant une capacité d'adsorption de NH₃ exprimée en tant que rapport molaire NH₃/Al de 0,7 à 0,9 ;
mélanger des sources de sodium, de potassium, d'alumine, de silice, d'eau et éventuellement une matrice organique afin de former un gel ;
chauffer le gel dans une cuve à une température allant de 80 à 200 °C afin de former un matériau cristallin ;
effectuer un échange d'ammonium sur ledit matériau ;
introduire un premier métal choisi dans le groupe alcalino-terreux, le groupe des terres rares, le groupe alcalin ou des mélanges de ceux-ci, et un deuxième métal choisi parmi le cuivre, le fer et des mélanges de ceux-ci, dans ledit matériau cristallin par échange d'ions en phase liquide ou solide, imprégnation ; et
traiter à la vapeur ledit matériau à une température de 400 à 600 °C dans 1 à 100 % de vapeur pendant au moins 0,1 heure, afin de produire un matériau cristallin microporeux ayant une structure cristalline comprenant un code structural choisi parmi CHA, LEV, AEI, AFT, AFX, EAB, ERI, KFI, SAT, TSC et SAV.

13. Procédé selon la revendication 12, le gel ayant un rapport molaire potassium sur silice (K/SiO₂) de moins de 0,5 et un rapport molaire hydroxyde sur silice (OH/SiO₂) de moins de 0,35.

14. Procédé selon la revendication 9 ou 12, ledit premier métal comprenant du magnésium, du calcium, du strontium, du baryum, du lanthane, du cérium, du praséodyme, du néodyme, des oxydes de terres rares mélangés, du potassium, du rubidium, du césium ou des mélanges de ceux-ci.

15. Procédé selon la revendication 9 ou 12, le matériau présentant un rapport atomique premier métal sur aluminium allant de 0,05 à 0,80 ; lorsque
le premier métal comprend du calcium, le matériau ayant un rapport atomique calcium sur aluminium allant de 0,05 à 0,50 ; lorsque
le deuxième métal comprend du cuivre, le matériau ayant un rapport atomique cuivre sur aluminium allant de 0,05 à 0,20 ; et lorsque
le deuxième métal comprend du fer, le matériau ayant un rapport atomique fer sur aluminium allant de 0,05 à 0,30.
